**Europäisches Patentamt**

**European Patent Office**

**Office européen des brevets**

(11) Veröffentlichungsnummer: **0 126 904**
**A1**

# (12) EUROPÄISCHE PATENTANMELDUNG

(21) Anmeldenummer: **84103589.2**

(22) Anmeldetag: **31.03.84**

(51) Int. Cl.³: **A 61 C 17/02**

(30) Priorität: **03.05.83 DE 3316016**

(43) Veröffentlichungstag der Anmeldung:
**05.12.84 Patentblatt 84/49**

(84) Benannte Vertragsstaaten:
**AT BE CH DE FR GB IT LI LU NL SE**

(71) Anmelder: **Gimelli & Co AG**
**Eichenweg 2**
**CH-3052 Zollikofen(CH)**

(72) Erfinder: **Hommann, Edgar**
**Reuenberg**
**CH-3257 Grossaffoltern(CH)**

(74) Vertreter: **Schlagwein, Udo, Dipl.-Ing.**
**Anwaltsbüro Ruppert & Schlagwein Bahnhofsallee 11**
**D-6350 Bad Nauheim(DE)**

(54) **Mund- und Zahnspritzgerät.**

(57) Bei einem Mund- und Zahnspritzgerät erfolgt die Energieversorgung eines Elektromotors (5) im Gerätesockel (1) über eine aufladbare Batterie (9) einer elektrischen Zahnbürste (8). Hierzu ist die elektrische Zahnbürste (8) in eine Zahnbürstenaufnahme (10) des Gerätesockels (1) genauso einzusetzen wie in ein übliches Ladegerät.

Durch diese Gestaltung benötigt das Mund- und Zahnspritzgerät keinen Netzanschluß. Es wird vielmehr ausschließlich mit Niederspannung betrieben.

Fig. 1

EP 0 126 904 A1

Gimelli & CO AG, CH-3052 Zollikofen          13.04.1983

## Mund- und Zahnspritzgerät

Die Erfindung bezieht sich auf ein Mund- und Zahnspritzgerät mit einer von einem Elektromotor angetriebenen Wasserpumpe. Solche Mund- und Zahnspritzgeräte finden im privaten Bereich immer größere Verbreitung und sind allgemein bekannt.

Die bisher gebräuchlichen Mund- und Zahnspritzgeräte werden entweder hydraulisch über das Wasserleitungsnetz oder elektrisch über das vorhandene Stromnetz angetrieben. Durchgesetzt haben sich wegen ihrer größeren Funktionstüchtigkeit nur die elektrisch angetriebenen Mund- und Zahnspritzgeräte.Leider geschehen vor allem in Badezimmern, in denen solche Mund- und Zahnspritzgeräte überwiegend verwendet werden, immer wieder Unfälle durch elektrische Geräte mit tödlichem Ausgang, weil sich die Benutzer elektrischer Geräte der Gefahr durch den elektrischen Strom nicht bewußt sind. Ein mit dem elektrischen Netz verbundenes Mund- und Zahnspritzgerät kann z.B. in ein mit Wasser gefülltes Waschbecken fallen und dieses unter Spannung setzen.

Wegen solcher Gefahren hat man in einigen Ländern bereits die Installation von Steckkontakten in Badezimmern generell verboten. Es können dann im Badezimmer keine netzbetriebenen elektrischen Geräte, wie z.B. Haartrockner oder Mund- und Zahnspritzgeräte, verwendet werden. Vor allem bei Mund- und Zahnspritzgeräten ist eine Benutzung im Badezimmer aber wünschenswert, da solche Geräte über einem Wasserbecken benutzt werden müssen.

Der Erfindung liegt die Aufgabe zugrunde, ein Mund- und Zahnspritzgerät zu entwickeln, welches eine möglichst hohe Sicherheit gegen Unfälle mit elektrischem Strom hat.

Diese Aufgabe wird erfindungsgemäß dadurch gelöst, daß der Elektromotor ein Niederspannungsmotor ist, dessen Anschlüsse mit einer in einer elektrischen Zahnbürste vorgesehenen aufladbaren Batterie verbindbar sind.

Die Batterie üblicher elektrischer Zahnbürsten arbeitet mit einer elektrischen Spannung von 2,4 Volt. Deshalb sind Unfälle durch Berührung stromführender Teile ausgeschlossen. Da der Elektromotor eines Mund- und Zahnspritzgerätes eine relativ große Leistungsaufnahme haben muß, würde es nicht genügen, diesen mit der Sekundärwicklung des Transformators des Ladegerätes der Zahnbürste zu verbinden. Die Batterie ist jedoch in der Lage, kurzfristig den erforderlichen Strom abzugeben, wobei sie sich relativ stark entleert.

- 3 -

Da die Batterie der elektrischen Zahnbürste jedoch
zwangsläufig wieder aufgeladen wird, sobald die Zahnbürste bei Nichtbenutzung in das Ladegerät gesetzt
wird, stellt diese Beanspruchung der Batterie keinen
Nachteil dar.

Eine vorteilhafte Ausgestaltung der Erfindung besteht
darin, daß der Gerätesockel eine Zahnbürstenaufnahme
hat, welche genau wie die Zahnbürstenaufnahme eines
Ladegerätes für die elektrische Zahnbürste gestaltet
ist und die einen mit dem Elektromotor verbundenen
Spannungsabgriff zur Entnahme elektrischer Energie
aus der Batterie der Zahnbürste hat. Diese Ausführungsform ist von der Handhabung her besonders einfach und
praktisch. Man braucht lediglich die elektrische
Zahnbürste, welche man zum Zähneputzen ohnehin benötigt, in die Zahnbürstenaufnahme des Mund- und Zahnspritzgerätes zu stellen, um eine Energiequelle für
seinen Elektromotor zu haben. Das erfindungsgemäße
Mund- und Zahnspritzgerät kann deshalb in einem Raum
benutzt werden, in dem kein Netzanschluß vorgesehen
ist. Dadurch ist eine absolute Sicherheit gegen Unfälle
durch elektrischen Strom gegeben.

Eine alternative, ebenfalls sehr sichere Ausführungsform ist im Anspruch 3 angegeben. Auch sie bietet den
Vorteil, daß im Mund- und Zahnspritzgerät keine Netzspannung vorhanden ist. Das Ladegerät selbst, welches
mit Netzspannung betrieben wird und fest an der Wand angebracht ist, bietet die Möglichkeit, aus der Batterie
mittels eines Verbindungskabels den Strom mit Niederspannung für den Motor des Mund- und Zahnspritzgerätes
zu liefern, so daß auch hier beim Hineinfallen des Gerätes in das Wasserbecken kein Gefahrenherd für den Benutzer entsteht.

-4-

Zweckmäßig ist es auch, wenn das Mund- und Zahnspritzgerät mit dem Ladegerät zu einer Einheit zusammengefaßt ist, wie das im Anspruch 4 angegeben wurde. Eine
solche Gesamtanordnung ist besonders kostengünstig herzustellen. Es bietet gegenüber elektrischen Unfällen
hohe Sicherheit, da die mit dem Netz verbundenen Teile
leicht wasserdicht gekapselt werden können, während in
den übrigen nicht zu kapselnden Teilen nur Niederspannung vorhanden ist.

Die Erfindung läßt zahlreiche Ausführungsformen zu.
Zur Verdeutlichung ihres Grundprinzips sind drei davon
in der Zeichnung dargestellt und werden nachfolgend
beschrieben.

Es zeigen:

       Figur 1 - eine erste Ausführungsform eines
                  erfindungsgemäßen Mund- und Zahnspritzgerätes;

       Figur 2 - ein übliches Ladegerät mit einer
                  elektrischen Zahnbürste, welche in
                  das erfindungsgemäße Mund- und Zahnspritzgerät einsetzbar ist;

       Figur 3 - eine zweite Ausführungsform eines
                  erfindungsgemäßen Mund- und Zahnspritzgerätes, elektrisch verbunden
                  mit dem Ladegerät einer elektrischen
                  Zahnbürste;

Figur 4 - eine dritte Ausführungsform eines
erfindungsgemäßen Mund- und Zahnspritzgerätes.


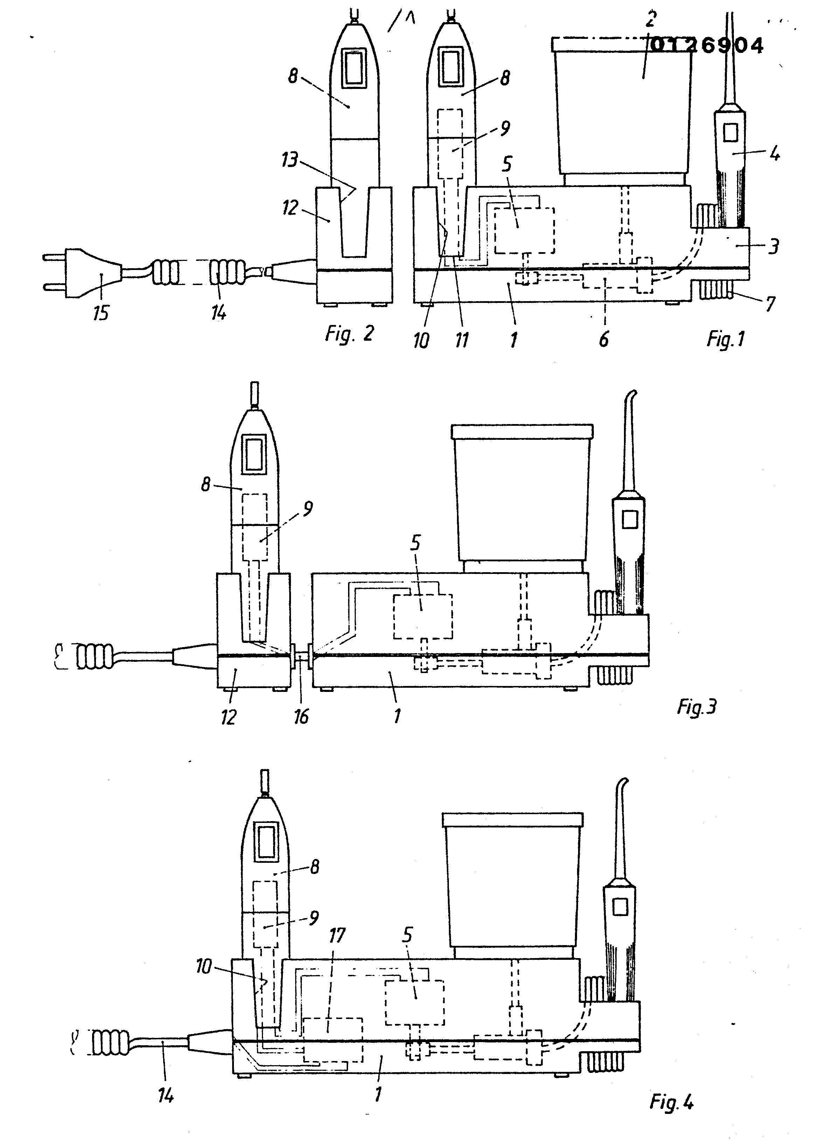

Das in Figur 1 dargestellte Mund- und Zahnspritzgerät hat einen Gerätesockel 1, auf dem ein Wasserbehälter 2 steht. Neben dem Wasserbehälter 2 ist in einer Halterung 3 ein Handstück 4 mit Spritzdüse angeordnet. Bei Benutzung des Mund- und Zahnspritzgerätes treibt ein gestrichelt angedeuteter Elektromotor 5 eine ebenfalls gestrichelt dargestellte Pumpe 6 an, so daß Wasser aus dem Wasserbehälter 2 über den Schlauch 7 in das Handstück 4 strömen und von dort über die Spritzdüse spritzen kann.

Wesentlich für die Erfindung ist, daß es sich bei dem Elektromotor 5 um einen Niederspannungsmotor handelt. Weiterhin ist erfindungswesentlich, wie dieser Elektromotor mit elektrischer Energie versorgt wird. Für diese Energieversorgung wird eine übliche elektrische Zahnbürste 8 mit einer aufladbaren Batterie 9 herangezogen. Die elektrische Zahnbürste 8 steht genau wie im Ladegerät in einer Zahnbürstenaufnahme 10 des Gerätesockels 1. Diese Zahnbürstenaufnahme 10 hat einen Spannungsabgriff 11, von dem aus elektrische Energie aus der Batterie 9 zum Elektromotor 5 zu fließen vermag, sobald die Zahnbürste 8 in der Zahnbürstenaufnahme 10 steht.

- 6 -

Selbstverständlich kann zwischen dem Spannungsabgriff 11 und dem Elektromotor 5 ein nicht dargestellter elektrischer Schalter vorgesehen sein, so daß das Mund- und Zahnspritzgerät auch bei in die Zahnbürstenaufnahme 10 abgesetzter Zahnbürste 8 abgestellt werden kann.

Die Figur 2 zeigt ein übliches Ladegerät 12 mit einer Zahnbürstenaufnahme 13. Dieses Ladegerät 12 hat ein Netzkabel 14 mit einem Stecker 15 und ist dadurch an ein elektrisches Netz anschließbar. In der Zahnbürstenaufnahme 13 steht die elektrische Zahnbürste 8. Diese Zahnbürste 8 ist aus der Zahnbürstenaufnahme 13 herauszuziehen und in die Zahnbürstenaufnahme 10 des Mund- und Zahnspritzgerätes einzusetzen, wenn das erfindungsgemäße Mund- und Zahnspritzgerät benutzt werden soll.

Bei der Ausführungsform gemäß Figur 3 besitzt der Gerätesockel 1 des Mund- und Zahnspritzgerätes keine Zahnbürstenaufnahme 10. Statt dessen ist aus dem Gerätesockel 1 ein Niederspannungskabel 16 zum Ladegerät 12 geführt. Dieses Ladegerät 12 ist so gestaltet, daß Strom von der Batterie 9 der im Ladegerät 12 stehenden Zahnbürste 8 durch das Niederspannungskabel 16 zum Elektromotor 5 im Gerätesockel1 fließen kann.

Die Figur 4 zeigt eine Ausführungsform eines Mund- und Zahnspritzgerätes, bei der dieses mit dem Ladegerät einer elektrischen Zahnbürste kombiniert ist. Hierzu hat der Gerätesockel 1 genau wie bei der Ausführungsform gemäß Figur 1 eine Zahnbürstenaufnahme 10 zur Halterung der Zahnbürste 8 , jedoch zusätzlich im Gerätesockel 1 einen wasserdicht vergossenen Transformator 17, durch den die vom Netzkabel 14 ankommende Netzspannung heruntertransformiert wird und von dem aus die Batterie 9 in der Zahnbürste 8 mit elektrischer Energie versorgt wird. Der Elektromotor 5 ist wiederum ein Niederspannungsmotor, der ausschließlich von der Batterie 9 in der Zahnbürste 8 elektrische Energie erhält.

Es sei abschließend angemerkt, daß es zwei Arten aufladbarer Zahnbürsten gibt. Die einen weisen zwei Kontaktstifte aufund werden über einen Gleichstrom von 1,2 bis 2,4 V aufgeladen. Bei den anderen Zahnbürsten erfolgt die Aufladung induktiv, d.h., ein Sekundärstromkreis befindet sich in der Zahnbürste und erzeugt den notwendigen Aufladestrom

Bei der erstgenannten Zahnbürstenbauart kann der Strom für die Inbetriebsetzung des Motors des Mund- und Zahnspritzgerätes an den Kontaktstiften, welche zur Aufladung dienen, aus der Batterie entnommen werden. Bei Zahnbürsten mit induktiver Aufladung müssen in der Zahnbürste zwei Kontaktstellen nach außen gezogen werden, um Strom aus ihrer Batterie entnehmen zu können.

**0126904**

Auflistung der mit Positionszahlen gekennzeichneten
Teile
_____

   1       Gerätesockel

   2       Wasserbehälter

   3       Halterung

   4       Handstück

   5       Elekrtomotor


   6       Pumpe

   7       Schlauch

   8       elektrische Zahnbürste

   9       Batterie

 10       Zahnbürstenaufnahme


 11       Spannungsabgriff

 12       Ladegerät

 13       Zahnbürstenaufnahme

 14       Netzkabel

 15       Stecker


 16       Niederspannungskabel

 17       Transformator

Gimelli & Co AG, CH-3052 Zollikofen          13.04.1983

- 1 -

Ansprüche

1. Mund- und Zahnspritzgerät mit einer von einem Elektromotor angetriebenen Wasserpumpe, d a - d u r c h  g e k e n n z e i c h n e t, daß der Elektromotor (5) ein Niederspannungsmotor ist, dessen Anschlüsse mit einer in einer elektrischen Zahnbürste (8) vorgesehenen aufladbaren Batterie (9) verbindbar sind.

2. Mund- und Zahnspritzgerät nach Anspruch 1, d a - d u r c h  g e k e n n z e i c h n e t, daß der Gerätesockel (1) eine Zahnbürstenaufnahme (10) hat, welche genau wie die Zahnbürstenaufnahme (13) eines Ladegerätes (12) für die elektrische Zahnbürste (8) gestaltet ist, und die einen mit dem Elektromotor (5) verbundenen Spannungsabgriff (11) zur Entnahme elektrischer Energie aus der Batterie (9) der Zahnbürste (8) hat.

- 2 -

3. Mund- und Zahnspritzgerät nach Anspruch 1, d a - d u r c h g e k e n n z e i c h n e t, daß sein Gerätesockel (1) über ein Niederspannungskabel (16) mit einem elektrischen Ladegerät (12) einer elektrischen Zahnbürste (8) verbunden ist, und dieses Niederspannungskabel (16) im Ladegerät (12) bei eingesetzter Zahnbürste (8) mit der Batterie (9) der Zahnbürste (8) in Verbindung steht.

4. Mund- und Zahnspritzgerät nach Anspruch 1, d a - d u r c h g e k e n n z e i c h n e t, daß in seinem Gerätesockel (1) ein elektrisches Ladegerät einer elektrischen Zahnbürste (8) angeordnet ist.

Fig. 2 Fig. 1

Fig. 3

Fig. 4

Europäisches
Patentamt

## EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | DE-A-2 735 427  (HÜBNER)<br>* Seite 2, Zeilen 22-24 *<br><br>--- | 1 | A 61 C   17/02 |
| A | DE-A-2 926 309  (LICENTIA<br>PATENT-VERWALTUNGS-GMBH)<br><br>----- | | |

| RECHERCHIERTE SACHGEBIETE (Int. Cl. 3) |
|---|
| A 46 B   13/00<br>A 61 C   17/00<br>A 61 H   13/00 |

Der vorliegende Recherchenbericht wurde für alle Patentansprüche erstellt.

| Recherchenort | Abschlußdatum der Recherche | Prüfer |
|---|---|---|
| BERLIN | 23-07-1984 | SIMON J J P |